# EUROPEAN PATENT SPECIFICATION

(11) **EP 0 758 101 B1**
(45) Date of publication and mention of the grant of the patent: **03.05.2000**
(21) Application number: 96112731.3
(22) Date of filing: 07.08.1996
(51) Int. Cl.: G03B 27/58

(54) **Reloadable film canister system**
Nachladbarer Filmbehälter
Cassette de film rechargeable

(30) Priority: 07.08.1995 US 2012; 30.10.1995 US 8034; 22.01.1996 US 589831
(43) Date of publication of application: 12.02.1997
(73) Proprietor: Anacomp, Inc., Atlanta, Georgia 30324 (US)
(72) Inventor: FitzGerald, Kevin A., Fountain Valley, CA 92708 (US)
(74) Representative: Groening, Hans Wilhelm, Dipl.-Ing.

(56) References cited:
- EP-A- 0 528 236
- DE-A- 2 322 033
- GB-A- 2 139 984
- US-A- 4 043 648
- US-A- 4 834 309
- US-A- 5 181 066

## Description

### Background of the Invention

The present invention relates to a reloadable film canister and particularly to a canister for holding unexposed microfilm used to store blocks of data from camera systems connected to a host computer. Representative prior art for microfilm canisters are disclosed in U.S. Patents 4,153,361, 4,987,300, 5,153,625, 5,247,323 and 5,389,992. Typically, the stored microfilm is 105 mm wide and is wound around a core or reel that is inserted into the canister and freely rotates therein. The canister is typically constructed in two segments and has an exit slot for the film. Plush or foam material strips provide a light barrier as the film is pulled out of the canister for use by the camera system or other host machine.

U.S. Patent 4,153,361 discloses a light-tight web cassette for microfilm or the like having supply and take up cartridges mounted thereon. A web detector includes a rotatable, detectable disc external of the cassette. An electrical pulse is generated each time a detectable mark on the rotating disc passes between a light source and photocell, as the two cartridges in the cassette are rotated.

U.S. Patent 4,987,300 describes a system utilizing an optical-mechanical mechanism for a web-roll mounted within a cartridge. A movable flag is rotatably mounted to an underside of the cartridge and is pivoted as the web-roll rotates to interrupt a continuous beam of light of an optical sensing means passing under the cartridge. A light source and photodetecting pair forming the optical sensing means are spaced such that one element of the pair is positioned exterior to the cartridge. A spring-biased member couples the flag with a flange on the web-roll for pivoting of the flag, and a flange lip follower engages spaced notches on the flange lip such that reverse rotation of the web-roll is prevented.

U.S. Patents 5,153,625, 5,247,323 and 5,389,992 describe a system in which a field modulating disc is typically located within the light-tight film enclosure. Rotation of this field modulated disc is sensed by an external sensor which generates electrical pulses during the rotation of the reel. These pulses provide information which is accumulated, stored and displayed so that the amount of film removed and, more importantly, the amount of film remaining is known without opening of the canister for visual inspection. Knowledge of the depletion of the film is required to prevent having to splice two rolls of film together when a first roll is expended before all the data are recorded onto the film. It is also desirous to know the film usage to allow a margin for threading of the film into developer equipment, so that data is not lost due to exposure of the film to light.

Heretofore, the above described prior art microfilm canisters offered for sale have not been reloadable by the user. As a result, a significant amount of waste occurs because of the disposal of the canisters after a single use. Moreover, the ultimate user has not been able to use microfilm from a number of film manufacturers, but is instead obligated to discard the canister when each roll of film is depleted and substitute a filled canister purchased from the manufacturer that supplied the system.

### Summary of the Invention

Reloadable film canister systems constructed in accordance with the present invention provide several significant advantages.

One important feature of the preferred embodiment of the present invention is that the canister system is compatible for use with prior art systems already installed in some host machines. Such prior art systems are disclosed, for example, in U.S. Patents 4,987,300 and 5,153,625.

The unexposed microfilm is loaded onto a gear-toothed reel, and this gear in turn has a direct physical interaction with a detectable element external to the light-tight canister which, in the preferred embodiment, moves in a reciprocal linear path proximate the sensor of the host machine which computes the length of film removed from the reel and the amount of film remaining may be determined. Accordingly, the preferred embodiment of the present invention does not employ a rotating disc or other type of rotating detectable members.

A base plate supports the film, reel, canister and detectable assembly. Cutouts on the base plate reduce its weight and also facilitate the placement of the canister system in a supporting region of the host machine.

Another feature of the preferred embodiment is that microfilm may be easily loaded into the light-tight enclosure after the film within the enclosure has been used up. This film can be easily loaded in full or subdued daylight. To this end, a mylar leader is used with the film on the reel to prevent exposure to light during the loading of the reel into the canister or the removal of the reel from the canister. A tab on the mylar leader facilitates film insertion into a feed-roller assembly or other access to the film on the reel and the mylar leader is withdrawn after the enclosure has been closed.

In the preferred embodiment, the light-tight canister includes an upper and lower housing hinged in a clam-shell configuration allowing a 45 degree opening of the upper housing relative to the lower housing for removal of the upper housing in order to facilitate easy removal of the spent microfilm reel and installation of a reel loaded with unexposed microfilm into the canister.

Further advantages and applications will become apparent to those skilled in the art from the following detailed description and the drawings referenced herein.

### Brief Description of the Drawings

FIGURE 1 shows a perspective view of the right side of a reloadable film canister system constructed in accordance with a preferred embodiment of the present invention;
FIGURE 1a shows a perspective view of the mounting region of the host machine which receives the system of the present invention;
FIGURE 2 shows a left side elevational view of the upper housing member of the reloadable film canister system of FIGURE 1;
FIGURES 3a and 3b are front and rear elevational views, respectively, of the upper housing member of FIGURE 2;
FIGURE 4 shows a top plan view of the upper housing member of FIGURE 2;
FIGURE 5 shows a left side elevational view of the lower housing member of the reloadable film canister system of FIGURE 1;
FIGURES 6a and 6b are front and rear elevational views, respectively, of the lower housing member of FIGURE 5;
FIGURE 7 shows a top plan view of the lower housing member of FIGURE 5;
FIGURE 7a shows a side elevational view of the upper housing member in an open position relative to the lower housing member;
FIGURE 8 shows a top plan view of the base plate of the reloadable film canister system of FIGURES 1;
FIGURES 9a-b shows side and front elevational views of the inner gear of the system of the present invention;
FIGURES 10a-b shows side and front elevational views of the outer gear of the system of the present invention;
FIGURES 11a-d shows side and front elevational views of gears for a mechanical detectable assembly of the system of the present invention;
FIGURE 12 shows a side elevational view of an arm of the mechanical detectable assembly of the system of the present invention;
FIGURE 13a shows a left side elevational view of the security shroud of the system of the present invention, and FIGURE 13b shows a top view along lines 13b-13b of FIGURE 13a;
FIGURE 14a shows a rear elevational view taken along lines 14a-14a of FIGURE 14b of a first detectable assembly operatively connected to the gear system of the present invention, and FIGURE 14b shows a top view taken along lines 14b-14b of FIGURE 14a of the first detectable assembly operatively connected to the gear system;
FIGURE 15 shows the gears and arm of the first detectable assembly of FIGURES 14a and 14b;
FIGURE 16a shows a rear elevational view taken along lines 16a-16a of FIGURE 16b of a second detectable assembly operatively connected to the gear system of the present invention, and FIGURE 16b shows a top view taken along lines 16b-16b of FIGURE 16a of the second detectable assembly operatively connected to the gear system;
FIGURE 17a shows a simplified schematic of the detectable assembly of FIGURES 16a and 16b, and FIGURE 17b shows the gear and microswitch of the detectable assembly of FIGURES 16a and 16b;
FIGURE 18 shows an outside elevational view of a gear toothed reel of the reloadable film canister system of the present invention;
FIGURE 19 shows a cross-sectional view of the core of the reel of the present invention;
FIGURE 20 shows a front elevational view of the reel of the present invention;
FIGURE 21 shows a top plan view of the mylar leader of the reloadable film canister system of the present invention;
FIGURE 22 shows a front elevational view of the film with the mylar leader loaded on the reel; and
FIGURE 23 shows a cross-sectional view of the reel and film with the mylar leader of FIGURE 22.

### Detailed Description of the Preferred Embodiments

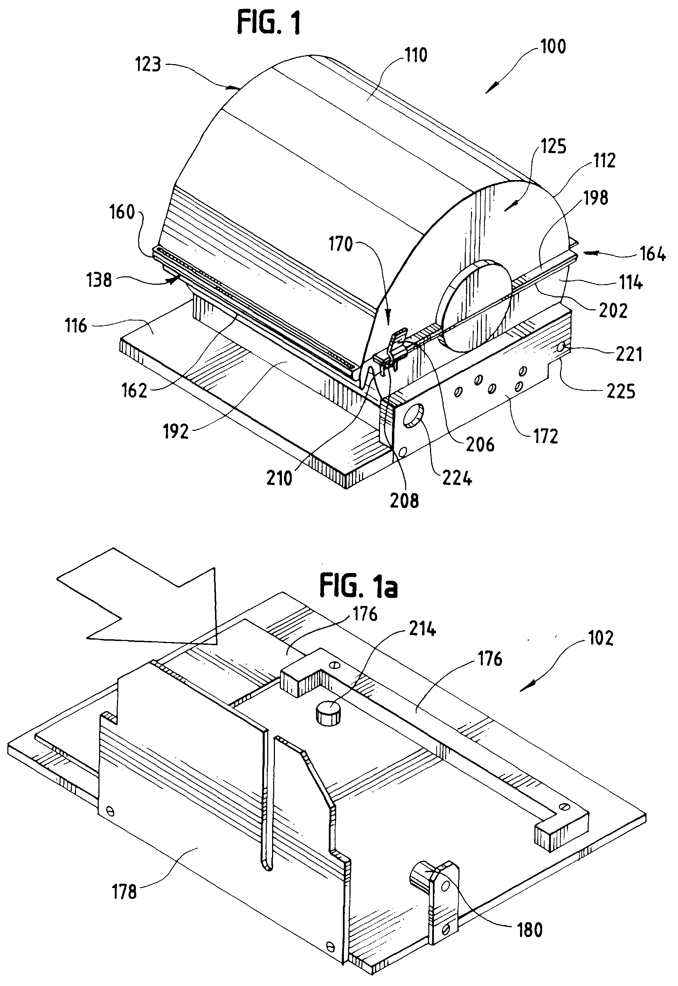

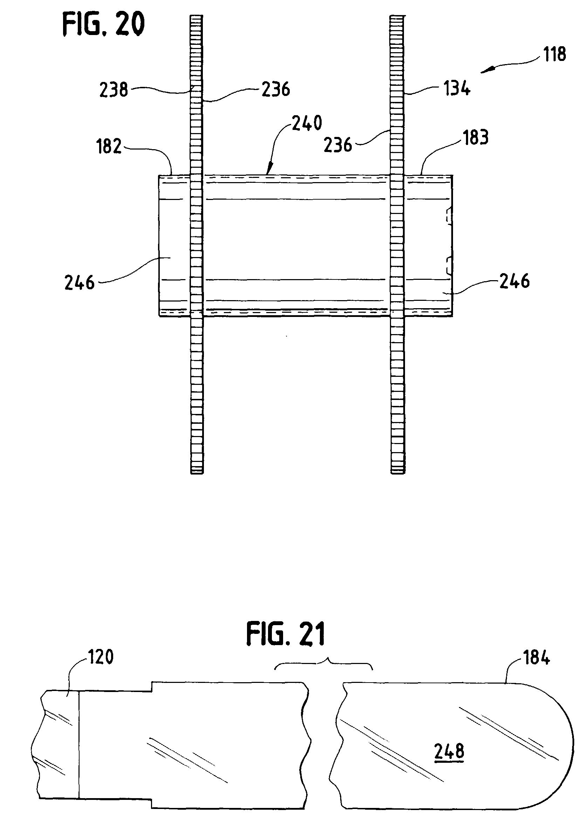

A preferred embodiment of a reloadable film canister system 100 of the present invention is illustrated in FIGURE 1, with a typical mounting region 102 of a host machine shown in FIGURE 1a. A generally clamshell-shaped canister 110 is comprised of an upper and a lower housing member 112, 114 mounted on a base plate 116. The upper and lower housing members 112, 114 enclose a reel 118 (shown in FIGURE 20, for example) for holding web material such as paper or film 120. The reel 118 is mounted onto bearing surfaces 122 on the interior walls of left and right sides 123, 125, respectively, of the housing members 112, 114.

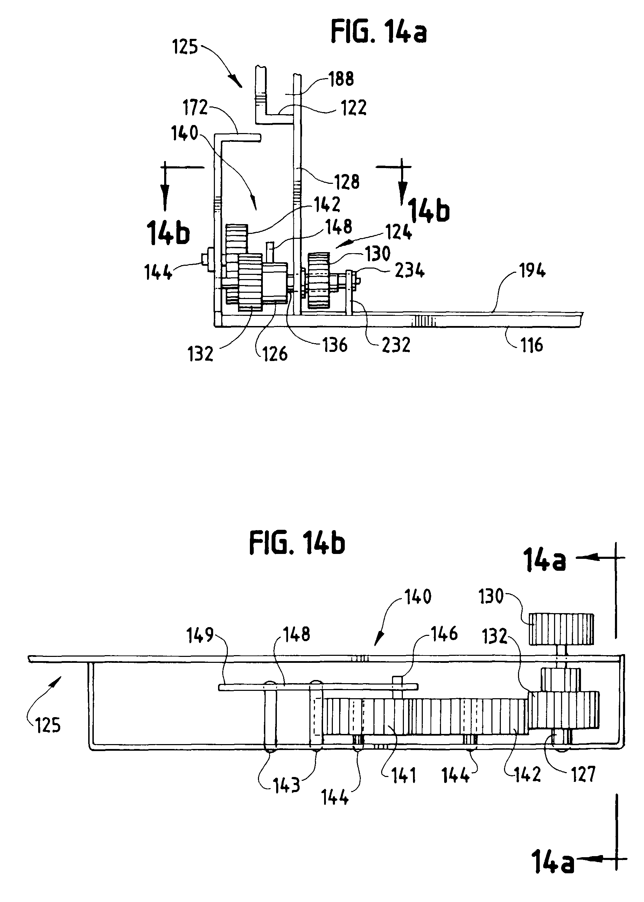

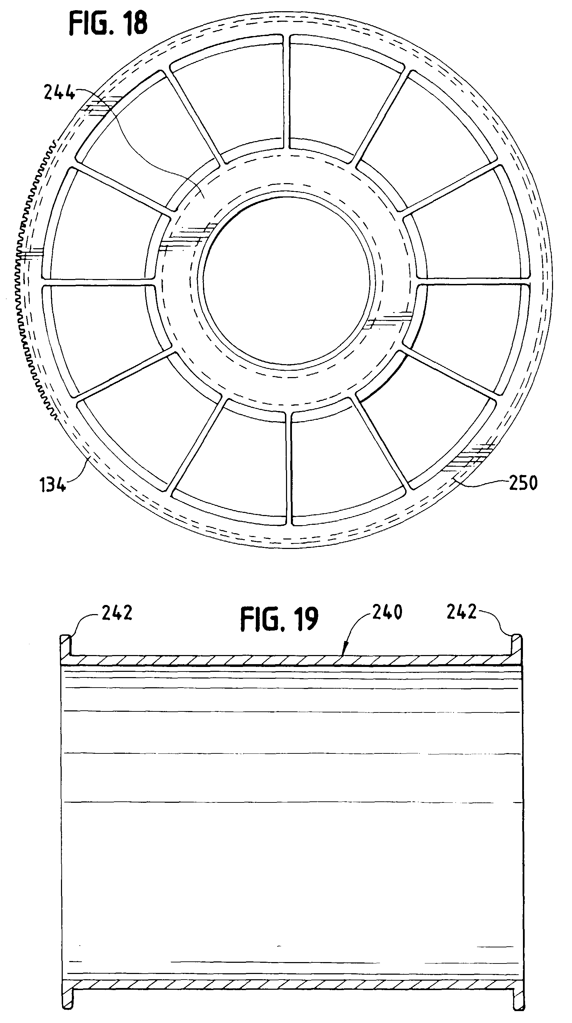

Referring to FIGURES 14a-b and 16a-b, a gear assembly 124 is mounted by a shaft 126 extending through a wall 128 at the rear of the lower housing member 114. A first gear 130 is attached on one end of the shaft 126 and positioned inside the canister 110, and a second gear 132 is attached on the other end of the shaft 126 and positioned outside the canister 110. The first gear 130 cooperates with a gear-toothed flange 134 of the reel 118, as described in detail in reference to FIGURES 18 and 20. The second gear 132 cooperates with a detectable assembly 140/150 such as shown in FIGURES 14a,b and 15, or FIGURES 16a,b-17a,b. The shaft 126 preferably extends through a light-sealable opening 136 in the lower housing member 114.

Referring once more to FIGURE 1, the film 120 is pulled off the reel 118 and out of the canister 110 through an exit slot 138 formed by a front edge 160 of the upper housing member 112 and a front edge 162 of the lower housing member 114. The housing members 112, 114 are preferably attached by a hinge assembly 164 comprising mating flanges 166, 168 at the rear of the canister 110. A locking mechanism 170 is provided at the left and right sides 123, 125 of the canister 110 to ensure that the canister is not accidentally opened and the film 120 is not damaged by exposure to light.

A safety shroud 172 is located on the right side 125 of the lower housing member 114 to prevent human contact of the moving parts of the system 100 during installation into or removal from the host machine. The terms front and rear as used herein refer to the relative locations of the canister's film exit slot 138 and hinge assembly 164, respectively. When mounted within the host machine, the reloadable film canister system 100 has its right side 125 located to the rear of the host machine's canister mounting region 102, so that the detectable assembly 140/150 of the system 100 may communicate with the host machine's sensor mechanism.

The base plate 116 for supporting the canister 110 and reel 118 in the host machine preferably includes cutouts 174 which mate the base plate 116 in proper position on the mounting region 102 of the host machine, as indicated in FIGURE 1a. That is, the mounting region 102 conventionally includes horizontal and vertical plate members 176, 178 to ensure proper positioning of the canister 110 and film 120 and for mating with mechanisms, such as a sensor 180, of the host machine.

The film 120 may be pulled out of the canister 110 by a metered feed-roller assembly (not shown) coupled to a stepper motor (not shown). The tension of the film 120 and any rollover travel of it out of the canister 110 may be regulated by a spindle, drive or brake means (not shown) external to the canister 110. To facilitate the insertion of the reel 118 and film 120 into a canister which may be semipermanently mounted in the host machine, one end 183 of the reel 118 is advantageously slightly longer than the other end 182. Thus, the reel 118 may only be inserted in the canister 110 so that a tab 184 of the film 120 is properly aligned to unroll with the tab 184 and film 120 exiting downwardly from the front of the canister. Notches may also be provided on one reel end 182, 183 to aid in the identification of the reel and film positioning. Loading of the film 120 into the canister 110 may thus be performed in a darkened room.

### Film Canister System

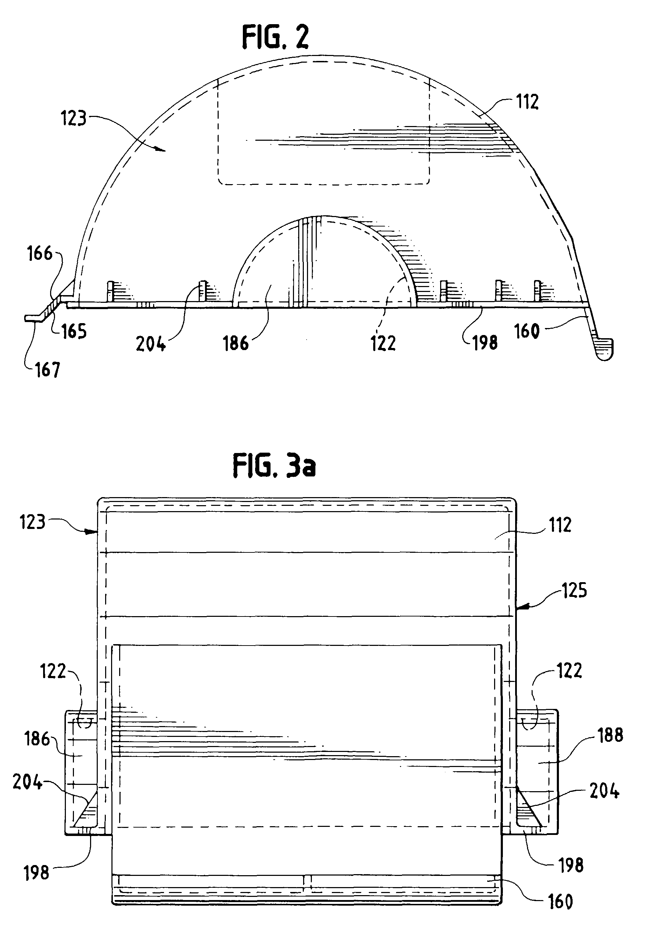

Referring now in detail to FIGURES 2-4 and 5-7, the upper and lower housing members 112, 114 of the canister 110 are comprised of a light opaque material and are conventionally black in color. Typically, the housing members 112, 114 are formed from a suitable thermoplastic, such as high impact polystyrene. These housing members 112, 114 cooperate to receive ends 182, 183 of the reel 118 in recesses 186, 188, respectively, formed inside the canister 110. These semi-circular recesses 186, 188 are formed on inside walls of the left and right sides 123, 125, respectively, of the housing members 112, 114 and are preferably polished to provide bearing surfaces 122 for the free rotation of the reel ends 182, 183. Advantageously, the recess 188 of the right side 125 is extended relative to the recess 186 of the left side 123 and extends at least partially over the shroud 172.

As previously indicated, the right reel end 183 is advantageously somewhat elongated or extended relative to the left reel end 182 and is readily received into the correspondingly extended right recess 188 of the canister. Also, the right reel end 183 is preferably notched, for easy tactile identification of the reel ends in subdued light or even in the dark. Alternatively, the left reel end 182 may be notched or other identifying methods known to those skilled in the art may be implemented, to further aid an operator to more readily identify the correct placement of the film 120 and reel 118 into the canister 110 in the dark.

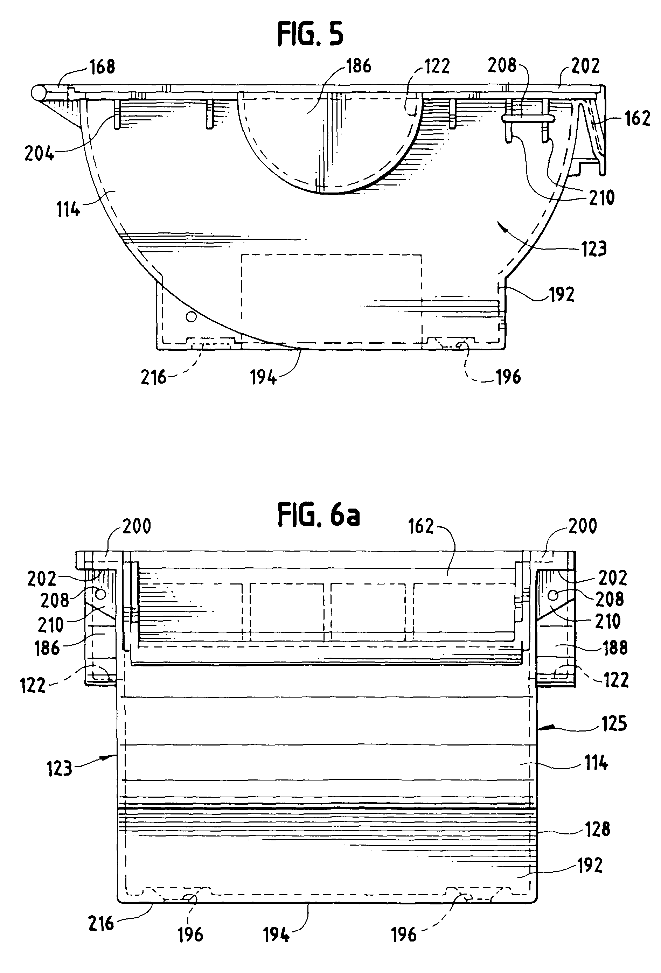

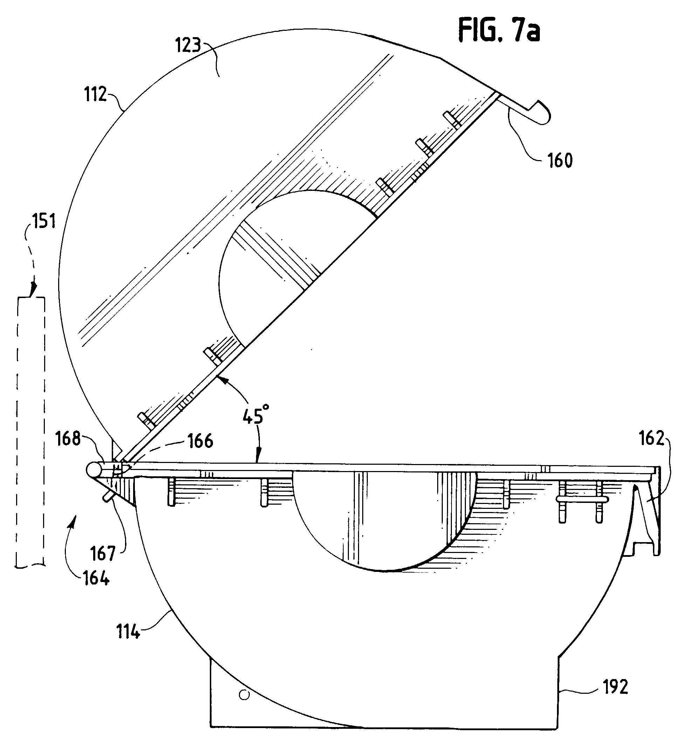

When mated, the housing members 112, 114 form a generally cylindrical body, with its longitudinal axis extending between the generally circular left and right sides 123, 125. The canister 110 forms a light-tight and dust-free enclosure for the reel 118 and film 120. A lower portion 192 of the lower housing member 114 is substantially rectangular in shape for greater stability of the canister 110. (See FIGURES 5 and 7.) The bottom 194 of the lower portion 192 is also then able to accommodate screws (not shown) received through openings 196 for attachment of the housing member 114 to the base plate 116, without interference of the screws with the reel 118 mounted in the lower housing member 114.

The components of the film exit slot 138 at the front of the canister 110 are shown to the right in FIGURES 2 and 5. The upper front cage 160 of the canister overlaps the lower front edge 162 of the canister to provide a light-tight seal. The upper front edge 160 is substantially straight. The lower front edge 162 is also substantially straight such that the lower front edge 162 is substantially parallel to the upper front edge 160. The upper and lower front edges 160, 162 have an inside lining of a light-sealing material (not shown), which is preferably strips of velvet. The nap of the velvet material is of a thickness such that the clearance of the exit slot 138, between the strips of velvet, accommodates 4-7 mm thick film without substantial friction thereon. Alternatively, strips of other plush or foam material may be used as the light-sealing material where the material thickness is chosen to provide a substantially light-tight seal at the exit slot 138 without substantial frictional contact with the film 120.

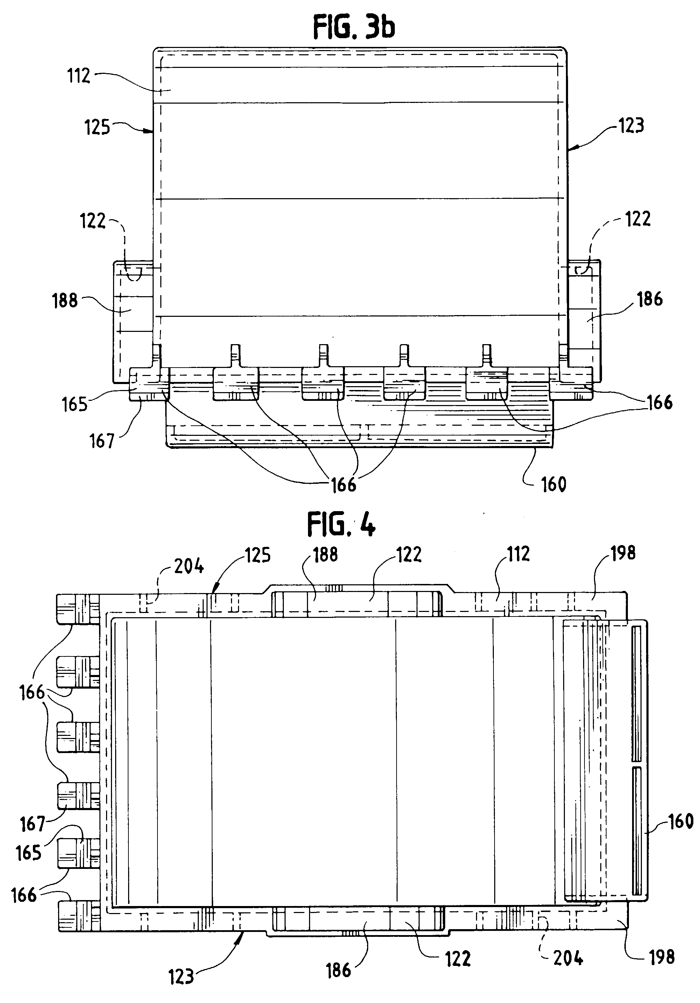

A feature of this invention is that the upper housing member 112 may be easily physically removed from the lower housing member 114 by virtue of the hinge assembly 164 of the canister 110 as shown to the left in FIGURES 4 and 7. As shown, segmented flanges 166, 168 are respectively provided at the rear of the housing members 112, 114 such that the individual upper flange segments 166 are received into respective spaces 169 between the lower flange segments 168. Preferably, the upper flanges 166 have angled portions 165 and horizontal ends 167, as shown in FIGURE 2. The internal edges of the angled portions 165 and ends 167 are aligned by internal edges of the lower flange segments 168 to advantageously provide automatic alignment of cooperating light seals 198, 200, respectively, formed on the upper edge of the lower housing member 114 and the lower edge of the upper housing member 112.

The lower flanges 168 are preferably horizontal as shown in FIGURE 5 and facilitate the insertion and removal of the upper housing member 112 in the cramped canister area of the host machine. This allows both the reel and the new unexposed reel of film to be easily installed. Without this feature, it would be necessary to remove the entire film canister system 100 from the host machine each time a new reel of film is installed since upward, opening motion of the upper housing member 112 is limited to about 45 degrees, as shown in FIGURE 7a, due to the presence of a wall 151 on that side of the host machine interior. Such limited 45 degree opening between the upper and lower members 112, 114 is not sufficient to physically remove the exhausted reel and replace it with a reel of unexposed film.

The hinge assembly 164 preferably extends substantially the length of the rear of the canister 110. The mating flanges 166, 168 prevent light from entering the canister 110 through the hinge assembly 164. Additional light baffles are provided along the side edges of the upper and lower housing members 112, 114 and are comprised of extensions 198 of the upper housing member 112 which are received into depressions 200 formed in slightly wider extensions 202 of the lower housing member 114. The upper extensions 198 are shown in FIGURE 4 and the lower extensions 202 and depressions 200 are shown in FIGURE 7. Wedge-shaped struts 204 are indicated along the extensions 198, 202 in FIGURE 2 and 5 and are preferably included to provide added structural integrity to the extensions 198, 202.

A preferred construction of the locking mechanism 170 is shown in FIGURE 1. As indicated, a generally C-shaped clip 206 is provided near the front of the lower housing member 114 at the left and right aides 123, 125. It is preferably mounted by a hinge 208 extending through wedge-shaped supports 210, similar to the struts 204 along the extensions 198, 202. The hinge 208 allows the locking clip 206 to pivot upward wherein the concave side of the clip 206 securely captures the upper extension 198, with a tight fit. The clip 206 is sufficiently flexible to extend slightly in capturing the upper extension 198, and releases the extension 198 upon downward/outward pressure on the clip end. It is obvious to those skilled in the art that other conventional locking means may alternately be used in the present invention without loss of the advantages of the present invention.

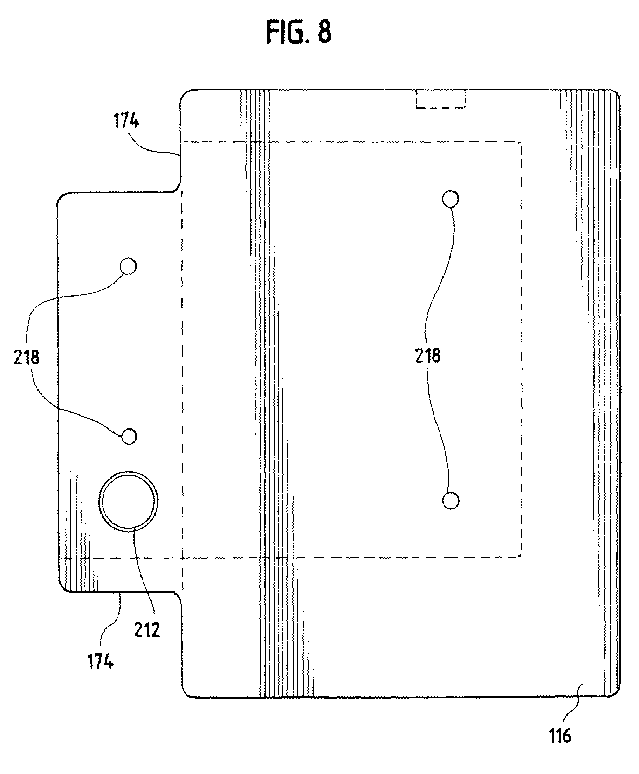

As illustrated in FIGURES 1 and 8, the base plate 116 extends somewhat beyond the length of the canister 110 as measured along its longitudinal axis. The base plate 116 also extends substantially the width of the canister 110, measured from the front exit slot 138 to the rear hinge assembly 164. Cutouts 174 are provided as required for mounting of the reloadable film canister system 100 in the host machine, and also reduces the weight of the base plate 116. A hole 212 is provided to allow a post 214 in the host machine mounting region 102 (FIGURE 1a) to be received therethrough. A hole 216 in the bottom 194 of the lower housing member 114 (FIGURES 5 and 7) also accommodates the post 214. Holes 218 are also provided in the base plate 116 for attachment with the lower canister 114 via screws (not shown). The base plate 116 supports the weight of the canister 110, reel 118, film 120 and detectable assembly 140/150 in the host machine.

The lower housing member 114 has the safety shroud 172 positioned above the gear assembly 124 and attached to the base plate 116. The purpose of the shroud 172 is to serve as a safety shroud to prevent the host machine operator's hands from touching the detectable assembly 140/150 as he or she reaches into the host machine's canister mounting region 102 to install or remove the reloadable film canister system 100. The shroud, however, is not light-tight and is external of the interior light-tight space within the canister 110. The detectable assembly 140/150 is positioned on the base plate 116 between the lower housing member 114 and the shroud 172 for cooperation with the gear assembly 124, and therefore the safety shroud 172 preferably extends the width of the canister side 125 to also cover the detectable assembly 140/150. Although a four-sided barrier is preferred, front and rear portions of the shroud 172 may be omitted and still adequately provide the desired measure of safety from the moving parts of the detectable assembly 140/150.

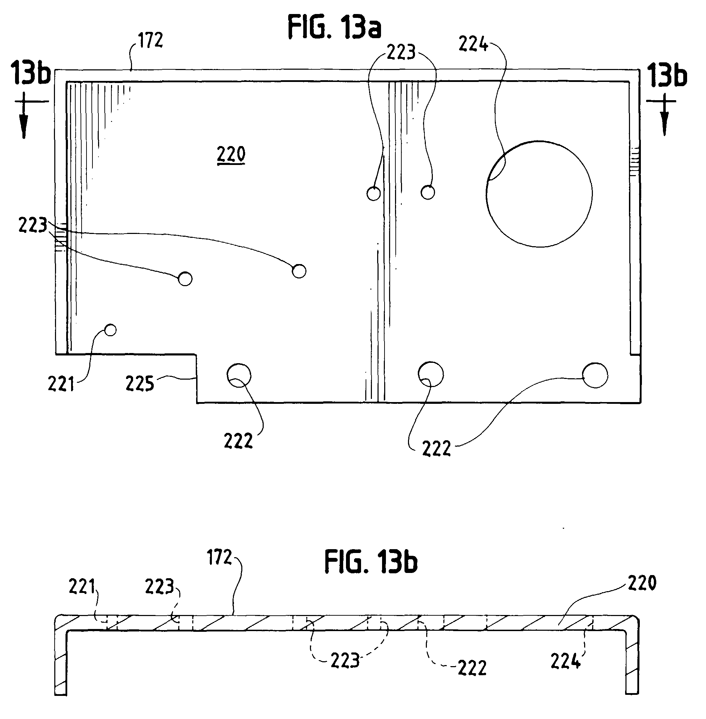

Referring to FIGURES 13a and 13b, the shroud 172 is preferably formed of molded plastic and has four sides, with its largest side 220 including small holes 222, 223 for fasteners and a larger hole 224 to allow communication with a sensor 180 of the boat machine (FIGURE 1a) therethrough. In alternative embodiments, more or fewer holes than those shown, of appropriate size(s), may be included on the shroud 172. A corner cutout 225 accommodates one of the horizontally mounted plates 176 of the host machine which is located on its mounting region 102. The lower holes 222 of the shroud 172 receive screws to attach the shroud to the base plate 116, and the holes 223 receive fasteners to fasten the detectable assembly 140/150, described below, to the shroud 172. A hole 221 in the shroud 172 is used to mount one end of the gear assembly 124, as described below. In alternative embodiments, however, it is understood that the detectable assembly 140/150 may be mounted directly to the base plate 116 instead of the shroud 172, using mounting posts and other methods known to those skilled in the art.

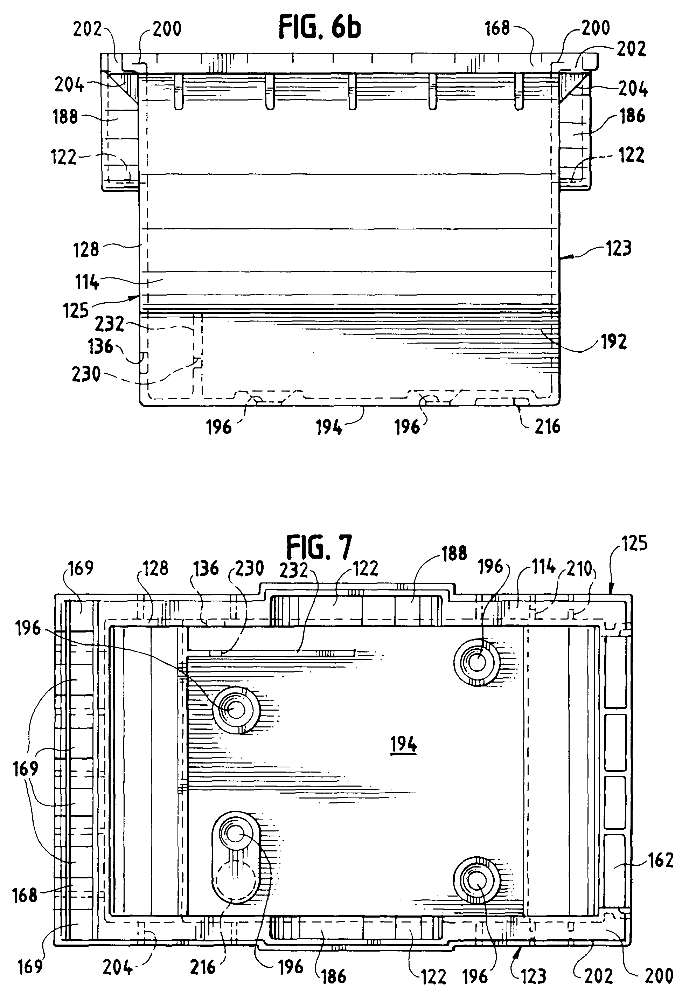

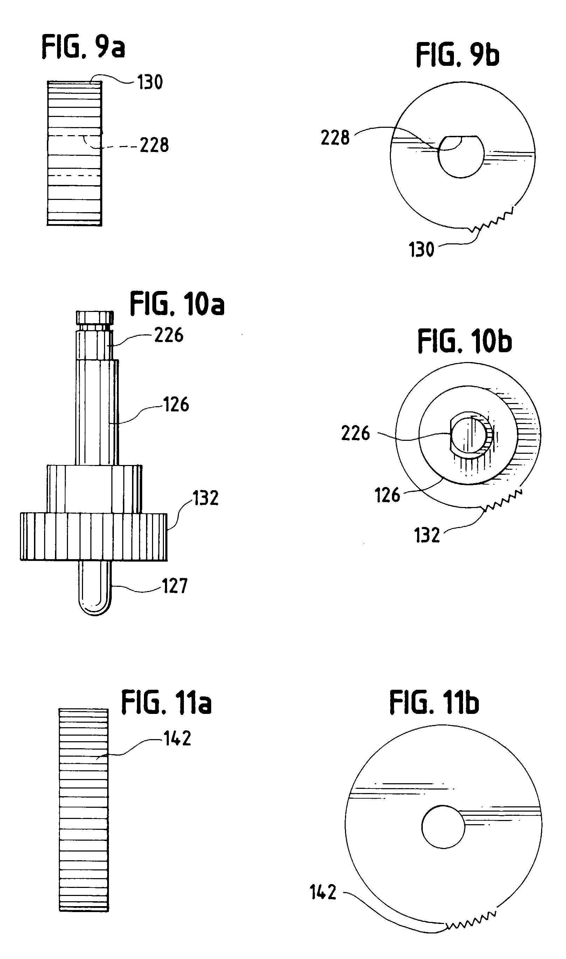

Referring to FIGURES 9 and 10, the first and second gears 130, 132 , respectively, are shown in their preferred construction. The second gear 132 preferably has a mounting shaft 126 which is inserted through a light-sealable hole 136 on the lower housing member 114 such that the second gear 132 is outside and the first gear 130 is attached on the shaft 126 on the inside of the housing member 114. The shaft 126 has multiple diameters and an end portion 226 with a straight or flat side for fixing and rotating the first gear 130, which has a mating, flat-sided opening 228 of substantially the same diameter as the end portion 226. The end of the shaft 126 is received through a hole 230 in a wall 232 formed on the bottom 194 of the lower housing member 114 and indicated in FIGURES 6 and 7. This elongated, triangular wall 232 is preferably molded into the housing member bottom 194 and does not interfere with the reel 118 or film 120. A fastener 234 is received on the end of the shaft 126 which extends through the wall 232. Preferably, a short shaft 127 having a blunt end extends orthogonal to the other side of the second gear 132 from the shaft 126, and the shaft 127 is received in the hole 221 of the shroud 172 to mount the end of the gear assembly 124 located the farthest from the canister housing 114.

A preferred embodiment of the reel 118 constructed in accordance with the present invention is shown in FIGURES 18 and 20, wherein a first flange 134 of the reel 118 has gear teeth 236 which mate with the first gear 130 of the gear assembly 124 described herein. A second flange 238 of the reel 118 is shown with gear teeth, although in alternative embodiments only the mating flange 134 is required to have gear teeth 236.

The first and second flanges 134, 238 are spaced apart along the length of a cylindrical core 240 of the reel 118, shown In FIGURE 19, wherein its core ends 242 are preferably sonically welded to inner depressions 244 of the flanges 134, 238 using methods known to those skilled in the art. For 105 mm microfilm, the flanges 134, 238 are located such that their inside surfaces are approximately 105 mm (4-1/6") apart. The core 240 is preferably hollow to allow insertion of a mandrel (not shown) during loading of the film 120 onto the reel 118. The core 240 and flanges 134, 238 are preferably constructed of material similar to the housing members 112, 114, as described above. Exterior surfaces 246 of the ends 182, 183 of the reel 118 are preferably polished smooth for nearly frictionless rotation inside the canister 110. As previously described, the ends 182, 183 are received into recesses 186, 188 on the sides 123, 125 of the upper and lower housing members 112, 114. For easy tactile identification, notches may be provided on one of the reel ends 182, 183, and for proper insertion into the canister the right reel end 183 is preferably extended relative to the left reel end 182.

### Reel Detectable Assemblies

Two common prior art reel sensing mechanisms of host machines involve either 1) inductive detection of metal circular disc elements typically attached to the reel located within the light-tight enclosure, or 2) the detection of a light source interrupted by a flag which is toggled by the reel's rotation. The first mechanism may comprise an inductive-type sensor which generates an oscillating magnetic field. As each metal circular disc element of the reel disk rotates past the sensor, an electrical current flows in the metal disk and changes the magnetic field, which then is seen as an output voltage change of the sensor. Thus, the rotation of each metal circular disc element within the light-tight enclosure is registered and the information is used to calculate the amount of film removed from the reel.

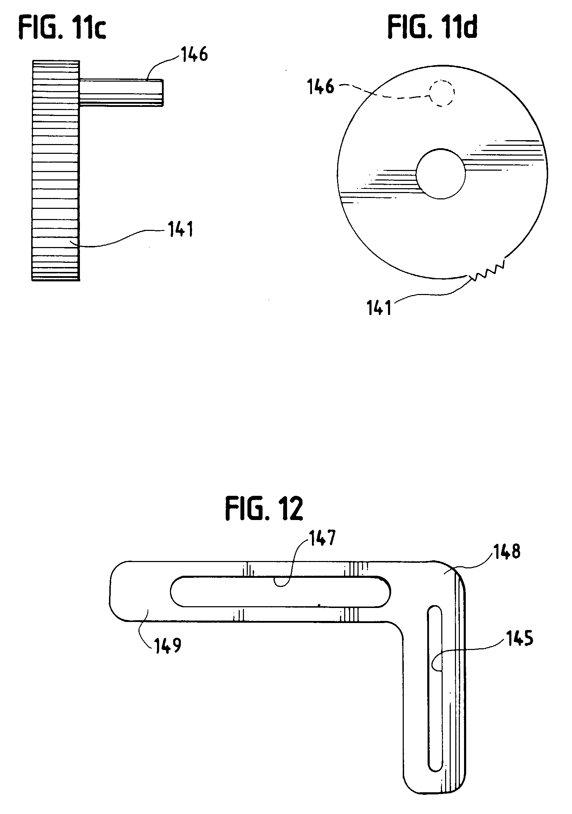

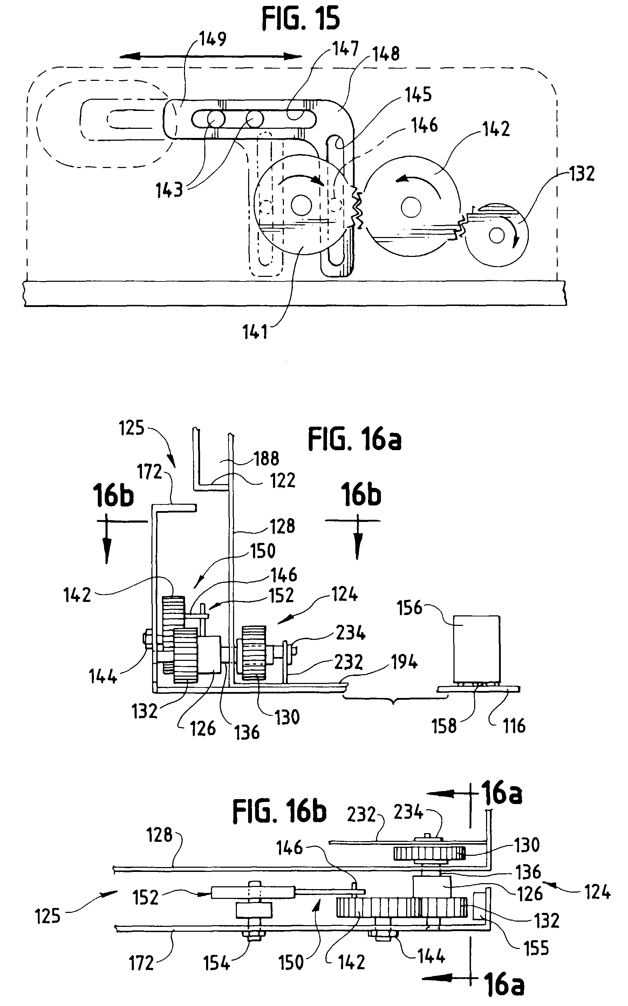

A preferred embodiment of a mechanical detectable assembly 140 compatible for use with inductive sensors is shown in FIGURE 14a,b and 15. The second gear 132 of the canister's gear assembly 124 mates with a gear 142, also shown in FIGURE 11 which in turn drives a gear 141. Gears 141, 142 are mounted on shafts 144 which are supported on the shroud 172. The gear 141 has a pin 146 extending at right angles toward the canister housing 114 and away from the shroud 172. The pin 146 is received in a slot 145 of an L-shaped arm 148, also shown in FIGURES 12 and 15. Secured to the shroud 172 are posts 143 which are received through a second slot 147 of the arm 148 which is orthogonal to the first slot 145, and serve to secure the arm 148 to the shroud 172. A conductive or metallic detectable element 149 is located on the arm 148 forwardly of the slot 147 (to the left in the drawings). The posts 143 also serve to guide the arm movement in a reciprocal linear path, shown by the arrow, as the pin 146 is rotated and moves up and down in the first slot 145. The metallic detectable element 149 may be of any conductive material known to those of ordinary skill in the art and may be attached to the arm 148 using conventional methods.

As the film reel 118 inside the canister 110 rotates, its gear-toothed flange 134 meshes with the first gear 130 of the canister's gear assembly 124 and causes the simultaneous rotation of the second gear 132, positioned outside of the lower housing member 114. The second gear 132 causes rotation of the gears 141, 142, which in turn causes the pin 146 to rotate in a vertical plane. The motion of the pin 146 causes the arm 148 to linearly move the metallic detectable element 149 proximate the host machine sensor 180.

The number of times that the metallic detectable element 149 reciprocates linearly with respect to the host machine sensor 180, per revolution of the reel 118, is the number of electrical pulses that the host machine sensor will produce for a revolution of the reel 118. Thus, in the preferred embodiment, in each cycle of operation of the detectable element, the detectable element is reciprocated in one direction to approximately the center of the host machine sensor and then in the opposite direction away from the center of the sensor to produce a single pulse. Preferably, the gears 141, 142 have equal diameters such that one rotation of the gear 142 equals one sensed movement of the metallic detectable element 149. Thus, the number of movements of the metallic detectable element 149 is controlled by selection of the gear ratios between the gear-toothed flange 134 and the first gear 130 of the gear assembly 124, and between the gears 141, 142 and the second gear 132 of the gear assembly 124.

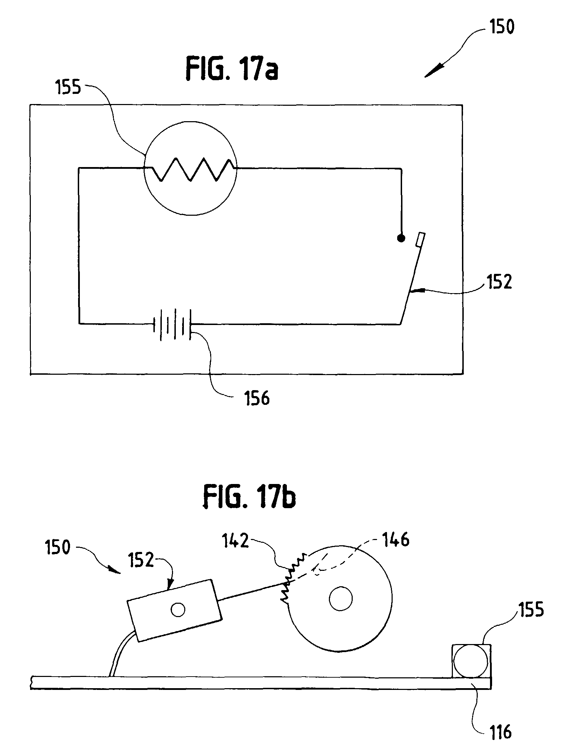

A preferred embodiment of an electromechanical detectable assembly 150 for use with the second type of host machine sensing mechanism is illustrated in FIGURES 16a,b and 17b. A simplified schematic of the detectable assembly 150 is shown in FIGURE 17a. As with the mechanical detectable assembly 140 described herein, a gear 142 mates with the second gear 132 of the canister's gear assembly 124, and the gear 142 includes a pin 146 orthogonal to the gear surface.

In this detectable assembly 150, the rotating pin 146 contacts a microswitch 152 at each revolution. The microswitch 152 is mounted by a shaft 154 to the shroud 172. A power supply 156 for a light emitting diode 155 (LED) preferably comprises a battery which is mounted on the base plate 116 outside the left side 123 of the canister 110, closest to the operator of the host machine. The battery 156 is preferably coupled by contacts 158 on the base plate 116 which are connected to wires routed through holes (not shown) in the base plate 116. The LED 155 is preferably mounted in plastic and screwed onto the base plate 116 as well. Because it is mounted external to the canister 110, removed from the film 120, the LED 155 does not have to be shielded. It is electrically coupled to the power source 156 by wires (not shown). The LED 155 is positioned between an existing LED (not shown) of the host machine and the host machine's sensor (not shown). The conventional constructions of the microswitch 152 and LED 155 are known to those of ordinary skill in the art. In a preferred embodiment, a second battery is provided adjacent the power source 156. The second battery and associated circuitry (not shown) act as a low power indicator and may use an audible alarm or buzzer of construction known to those skilled in the art.

While the host machine LED emits a continuous light which is to be interrupted, the instant LED 155 emits pulses of light corresponding to the microswitch activation caused by the gear 142. One rotation of the gear 142 equals one contact with the microswitch 152 and therefore one pulse of light. The number of light pulses per revolution of the film reel 118 is controlled by the gear ratios between the gear-toothed flange 134 of the reel, the first and second gears 130, 132 of the gear assembly 124 and the gear 142. In alternative embodiments, either of the detectable assemblies 140/150 may include one or more additional gears to achieve the desired gear ratios. In addition, other types of detectable elements may be utilized which communicate with the canister's gear assembly 124 and the gear-toothed reel 134 in the present invention.

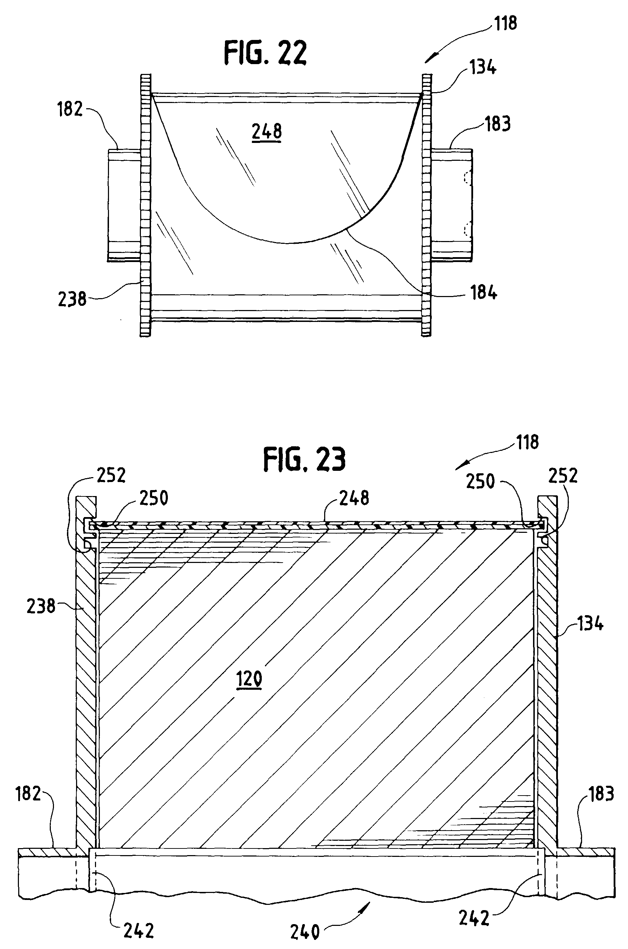

The canister 110 of the reloadable film canister system 100 of the present invention provides a light-tight and dust-free enclosure of paper or film 120 for storage and for use in a host machine. In order to provide protection against light and dust during the loading into the canister 110, a mylar leader 248 is preferably attached to the free end of the film 120 on the reel 118. This mylar leader 248 is preferably die-cut to include an easily accessible tab 184 as shown in FIGURES 21 and 22 for access to the film 120 such as for its insertion into a feed-roller assembly.

The mylar leader 248 is opaque and has a length that is preferably about one to one and one-half the circumference of the reel 118, plus an additional two to four inches for the tab 184. The mylar leader 248 preferably has a width slightly greater than that of the film 120 as shown in FIGURE 21, e.g., slightly greater than 105 mm, so that the mylar leader 248 is secured in annular grooves 250 on the inside of the flanges 134, 238, as shown in FIGURE 23. These grooves 250 are located at a radius measured from the central axis of the core 240 which corresponds to a fully loaded reel; i.e., to a maximum amount of film 120 on the reel 118. Thus, the mylar leader 248 prevents exposure of the film 120 to light and dust during the loading or unloading of the reel 118 into or out of the canister 110. To accommodate the use of the reel 118 with different sizes or lengths of film 120, additional annular grooves 252 are preferably formed on the flanges 134, 238. The grooves 252 are spaced radially inward from the first grooves 250 by a distance known to those skilled in the art.

Although this invention has been disclosed in the context of certain preferred embodiments, it will be understood by those skilled in the art that the present invention extends beyond the specifically disclosed embodiments to other alternative embodiments of the invention. Thus, it is intended that the scope of the present invention herein disclosed should not be limited by the particular disclosed embodiments described above.

## Claims

1. A reloadable canister system (100) for containing a medium (120) to be delivered to a host machine, said system (100) to be removably installed in a mounting region (102) of the host machine, the host machine having a sensor (180) registering the delivery of the medium from said system (100), said system (100) comprising:
a canister (110) comprising upper and lower housing members (112, 114);
a base portion (116) adapted to be received in the mounting region (102) of the host machine, said lower housing member (114) being mounted to said base portion (116);
a reel element (118) adapted to be received into said canister (110) and freely rotatable therein, said reel element (118) having a core portion (240) around which said medium is wound; characterised by:
a gear assembly (124) comprising an inner gear wheel (130) positioned within said canister (110) for meshing with said reel element (118) and an outer gear wheel (132) positioned outside said canister (110) and adapted to be rotated by said inner gear wheel (130); and
a detectable element (149) mounted external to said canister (110) and operably connected to said outer gear wheel (132) so that rotation of the outer gear wheel causes forward and backward movement of said detectable element along a substantially linear path, said detectable element (149) being in communication with the sensor (180) of the host machine;
wherein the extraction of the medium (120) out of said canister (110) by the host machine results in rotation of said reel element (118) and said inner gear wheel (130), said inner gear wheel (130) rotation causing rotation of said outer gear wheel (132), and said outer gear wheel rotation causing said movement of said detectable element (149) such that information relating to the amount of medium (120) delivered from said canister (110) is relayed to the host machine whereby the amount of medium (120) remaining on said reel element (118) in said canister (110) may be determined by the host machine.

2. The system of Claim 1, further comprising a safety shroud (172) mounted around said detectable element (149) on the outside of said lower housing member (114) of said canister (110) to prevent accidental contact by an operator with moving parts of said gear assembly (124).

3. The system of Claim 2, wherein said detectable element (149) is mounted to said safety shroud (172) and is positioned between said safety shroud (172) and the outer wall (128) of said lower housing member (114) of said canister (110).

4. The system of Claim 2, wherein said outer gear wheel (132) of said gear assembly (124) has portions (126, 127) extending orthogonally on both sides which are received through holes (221; 230) in said safety shroud (172) and said lower housing member (114) of said canister (110) for mounting therebetween.

5. The system of Claim 1, further comprising a mating gear (141, 142) operably connected to a slotted arm (148) having said detectable element (149) on one end, said mating gear (141, 142) adapted to rotate upon rotation of said inner gear wheel (130), said mating gear (141, 142) causing reciprocal linear motion of said detectable element (149).

6. The system of Claim 1, further comprising a mating gear (141, 142), a microswitch (152), a light emitting diode (155) and a power source (156), said mating gear (141, 142) being adapted to rotate upon rotation of said inner gear wheel (130) said mating gear (141, 142) being adapted to contact said microswitch (152) thereby causing light to be emitted by said LED (155) in a predetermined relationship with the rotation of said reel element (118).

7. The system of Claim 6, wherein said power source comprises a battery (156) mounted to said base portion (116) on a side of said lower housing member (114) not having said microswitch (152), said battery (156) being electrically connected to said microswitch (152) and said LED (155) by wires routed through said base portion (116).

8. The system of Claim 7, further comprising a second battery mounted on said base portion (116) and electrically coupled to said first battery (156), said second battery acting as a low power indicator to said first battery (156).

9. The system of Claim 1, wherein said reel element (118) comprises a pair of flanges (134, 238), one (134) of said flanges (134, 238) having gear teeth (236) for mating with said inner gear wheel (130) of said gear assembly (124) and causing rotation thereof.

10. The system of Claim 1, wherein a bottom portion (194) of said lower housing member (114) of said canister (110) has a protruding surface for mounting of said inner gear wheel (130) of said gear assembly (124) inside said canister (110), said protruding surface being positioned between said reel element (118) holding the medium (120) and said bottom portion (194).

11. The system of Claim 1, wherein said reel element (118) has two reel ends (182, 183) and one (183) of said reel ends (182, 183) is notched to facilitate the proper positioning of said reel element (118) in said canister (110).

12. The system of Claim 1, wherein said upper and lower housing members (112, 114) of said canister (110) combine to form a substantially cylindrical shape, said lower housing member (114) having a bottom portion (194) which is substantially rectangular for stable mounting of said canister (110) onto said base portion (116).

13. The system of Claim 1, wherein said system is arranged so as to be semipermanently installed into the host machine whereby said reel element (118) is easily removable from said canister (110) without removal of said system (100) from the host machine.

14. The system of Claim 13, further comprising a hinge assembly (164) formed on edges (166, 168) of said upper and lower housing members (112, 114) of said canister (110), said hinge assembly (164) providing easy removal of said upper housing member (112) from said lower housing member (114) to enable removal of said reel element (118) from said canister (110) while said system (100) is installed in the host machine.

15. The system of Claim 1, further comprising an opaque mylar leader (248) on the end of the medium (120) furthest from the core (240) of said reel element (118), said leader (248) having a tapered end portion (184) and a width slightly greater than the width of the medium (120), said leader (248) received in annular grooves (250, 252) formed on inside surfaces of flanges (134, 238) of said reel element (118).

16. The system of Claim 1, wherein the medium (120) comprises a 105 mm wide microfilm.

17. The system of Claim 1, wherein the medium (120) comprises paper.

## Patentansprüche

1. Nachladbares Behältersystem (100) zur Aufnahme eines an eine Verarbeitungsmaschine zu liefernden Mediums (120), wobei das System (100) entnehmbar in einen Einsetzbereich (102) der Verarbeitungsmaschine einsetzbar sein soll und die Verarbeitungsmaschine einen Sensor (180) aufweist, welcher die Lieferung des Mediums aus dem System (100) aufzeichnet und das System (100) umfaßt:
einen Behälter (110) bestehend aus einem oberen und einen unteren Gehäuseteil (112, 114);
einen Grundkörper (116), welcher zur Aufnahme im Einsetzbereich (102) der Verarbeitungsmaschine ausgebildet ist, wobei das untere Gehäuseteil (114) auf dem Grundkörper (116) befestigt ist;
einen Spulenkörper (118) zur Aufnahme im Behälter (110), wo er frei drehbar ist, wobei der Spulenkörper (118) einen Kern (240) hat, um welchen das Medium gewickelt ist,
gekennzeichnet durch
ein Zahnradgetriebe (124) bestehend aus einem Innenzahnrad (130), welches im Behälter (110) im Eingriff mit dem Spulenkörper (118) angeordnet ist und einem Außenzahnrad (132), das außerhalb des Behälters (110) angeordnet ist und zur Drehung durch das Innenzahnrad (130) vorgesehen ist und
ein außerhalb des Behälters (110) angebrachtes feststellbares Element (149), welches funktionell derart mit dem Außenzahnrad (132) in Verbindung steht, daß eine Drehung des Außenzahnrades eine Vorwärts- oder eine Rückwärtsbewegung des feststellbaren Elementes entlang einer im wesentlichen linearen Bahn verursacht und das feststellbare Element (149) mit dem Sensor (180) der Verarbeitungsmaschine zusammenwirkt;
wobei das Herausziehen des Mediums (120) aus dem Behälter (110) durch die Verarbeitungsmaschine eine Drehung des Spulenkörpers (118) und des Innenzahnrades (130) veranlaßt, die Drehung des Innenzahnrades (130) eine Drehung des Außenzahnrades (132) veranlaßt und die Drehung des Außenzahnrades (132) die Bewegung des feststellbaren Elementes (149) veranlaßt, so daß eine Information über den Umfang des aus dem Behälter (110) gelieferten Mediums (120) an die Verarbeitungsmaschine weitergegeben wird, wodurch der Umfang des auf dem Spulenkörper (118) im Behälter (110) verbliebenen Mediums (120) durch die Verarbeitungsmaschine bestimmt werden kann.

2. System nach Anspruch 1, welches weiterhin eine rund um das feststellbare Element (149) an der Außenseite des unteren Gehäuseteiles (114) des Behälters angebrachte Sicherheitsabdeckung (172) umfaßt, um eine zufällige Berührung des Bedienungspersonals mit bewegten Teilen des Zahnradgetriebes (124) zu verhindern.

3. System nach Anspruch 2, bei welchem das feststellbare Element (149) an der Sicherheitsabdeckung (172) angebracht und zwischen der Sicherheitsabdeckung (172) und der Außenwand (128) des unteren Gehäuseteiles (114) des Behälters (110) angeordnet ist.

4. System nach Anspruch 2, bei welchem das Außenzahnrad (132) des Zahnradgetriebes (124) Teile aufweist, die sich zu beiden Seiten in senkrechter Richtung erstrecken und zur Montage zwischen der Sicherheitsabdekkung (172) und dem unteren Gehäuseteil (114) in Durchgangslöchern (221, 230) derselben aufgenommen sind.

5. System nach Anspruch 1, bei welches weiterhin ein Eingriffszahnrad (141, 142) aufweist, das funktionell mit einem geschlitzten Arm (148) in Verbindung steht, der an einem Ende das feststellbare Element (149) trägt, wobei das Eingriffszahnrad (141, 142) derart angeordnet ist, daß es sich dreht, wenn sich das Innenzahnrad (130) dreht und das Eingriffszahnrad (141, 142) die lineare Hin- und Herbewegung des feststellbaren Elementes (149) veranlaßt.

6. System nach Anspruch 1, bei welches weiterhin ein Eingriffszahnrad (141, 142), einen Mikroschalter (152), eine Leuchtdiode (155) und eine Stromquelle (156) umfaßt, wobei das Eingriffszahnrad (141, 142) derart angeordnet ist, daß es sich dreht, wenn sich das Innenzahnrad (130) dreht, worauf das Eingriffszahnrad (141, 142) den Mikroschalter (152) betätigt, wodurch die Leuchtdiode (155) in einer vorgegebenen Abhängigkeit von der Drehung des Spulenkörpers (118) Licht aussendet.

7. System nach Anspruch 6, bei welchem die Stromquelle eine auf dem Grundkörper (116) auf einer Seite des unteren Gehäuseteiles (114), wo sich der Mikroschalter (152) nicht befindet, befestigte Batterie (156) ist, wobei die Batterie (156) mit dem Mikroschalter (152) und mit der Leuchtdiode (155) durch Drähte elektrisch verbunden ist, welche durch den Grundkorper (116) geführt sind.

8. System nach Anspruch 7, welches weiterhin eine zweite Batterie aufweist, welche am Grundkörper (116) befestigt und elektrisch mit der ersten Batterie (156) verbunden ist, wobei diese zweite Batterie dazu dient, anzuzeigen, wenn die Leistung der ersten Batterie (156) nachläßt.

9. System nach Anspruch 1, bei welchem der Spulenkörper (118) ein Paar Flansche (134, 238) aufweist, wobei einer (134) der Flansche (134, 238) eine Verzahnung (236) zum Eingriff in das Innenzahnrad (130) das Zahnradgetriebes (124) aufweist, um dessen Drehung zu veranlassen.

10. System nach Anspruch 1, bei welchem ein Unterteil (194) des unteren Gehäuseteiles (114) des Behälters (110) eine vorspringende Fläche zur Montage des Innenzahnrades (130) des Zahnradgetriebes (124) innerhalb des Behälters (110) aufweist, wobei die vorspringende Fläche zwischen dem das Medium (120) tragenden Spulenkörper (118) und dem Unterteil (194) angeordnet ist.

11. System nach Anspruch 1, bei welchem der Spulenkörper (118) zwei Spulenenden (182, 183) hat, von denen eines (183) eingekerbt ist, um die genaue Positionierung des Spulenkörpers (118) in dem Behälter (110) zu ermöglichen.

12. System nach Anspruch 1, bei welchem das obere und das unter Gehäuseteil (112, 114) des Behälters (110) zusammengesetzt im wesentlichen Zylinderform haben, wobei das untere Gehäuseteil (114) ein Unterteil (194) hat, welches im wesentlichen rechteckig ist, zum eine stabile Befestigung des Behälters (110) auf dem Grundkörper (116) zu erzielen.

13. System nach Anspruch 1, bei welchem das System derart ausgebildet ist, daß es semipermanent in die Verarbeitungsmaschine einsetzbar ist, wobei der Spulenkörper (118) leicht aus dem Behälter (110) entnehmbar ist, ohne das System (100) aus der Verarbeitungsmaschine entnehmen zu müssen.

14. System nach Anspruch 13, welches weiterhin eine Scharnieranordnung (164) umfaßt, die an Kanten (166, 168) des oberen und des unteren Gehäuseteiles (112, 114) des Behälters (110) ausgebildet ist, wobei dies Scharnieranordnung (164) ein einfaches Abnehmen des oberen Gehäuseteiles (112) vom unteren Gehäuseteil (114) und damit das Entnehmen des Spulenkörpers (118) aus dem Behälter (110) ermöglicht, während das System (100) in der Verarbeitungsmaschine verbleibt.

15. System nach Anspruch 1, welches weiterhin an dem vom Kern (240) des Spulenkörpers (118) abgewandten Ende des Mediums (120) ein lichtundurchlässiges Mylar-Endstück (248) aufweist, wobei dieses Endstück (248) einen abgestuften Endbereich (184) hat, dessen Breite ein wenig größer ist als die Breite des Mediums (120) und das Endstück (248) in ringförmigen Rillen (250, 252) aufgenommen wird, die an den Innenflächen der Flansche (134, 238) des Spulenkörpers (118) ausgebildet sind.

16. System nach Anspruch 1, bei welchem das Medium (120) ein 105 mm breiter Mikrofilm ist.

17. System nach Anspruch 1, bei welchem das Medium (120) Papier ist.

## Revendications

1. Système de cassette de film rechargeable (100) destinée à contenir un support (120) devant être délivré à une machine hôte, ledit système (100) devant être installé de manière amovible dans une région de montage (102) de la machine hôte, la machine hôte ayant un capteur (180) enregistrant la distribution du support à partir dudit système (100), ledit système (100) comprenant :
une cassette (110) comprenant des éléments de boîtier supérieur et inférieur (112, 114) ;
une partie de base (116) adaptée pour être reçue dans la région de montage (102) de la machine hôte, ledit élément de boîtier inférieur (114) étant monté sur ladite partie de base (116) ;
un élément formant bobine (118) adapté pour être reçu dans ladite cassette (110) et est susceptible de tourner librement à l'intérieur de celle-ci, ledit élément formant bobine (118) ayant une partie formant coeur (240) autour de laquelle est enroulé ledit support ; caractérisé par un ensemble d'engrenages (124) comprenant un engrenage intérieur (130) placé à l'intérieur de ladite cassette (110) pour s'engrener avec ledit élément formant bobine (118) et un engrenage extérieur (132) placé à l'extérieur de ladite cassette (110) et adapté pour être mis en rotation par ledit engrenage intérieur (130) ; et
un élément susceptible d'être détecté (149) monté à l'extérieur de ladite cassette (110) et raccordé de manière fonctionnelle audit engrenage extérieur (132) de telle sorte que la rotation de l'engrenage extérieur génère un mouvement vers l'avant et vers l'arrière dudit élément susceptible d'être détecté le long d'une trajectoire sensiblement linéaire, ledit élément susceptible d'être détecté (149) communiquant avec le capteur (180) de la machine hôte ;
dans lequel l'extraction du support (120) hors de ladite cassette (110) par la machine hôte entraîne une rotation dudit élément formant bobine (118) et dudit engrenage intérieur (130), la rotation dudit engrenage intérieur (130) entraînant la rotation dudit engrenage extérieur (132) et la rotation dudit engrenage extérieur entraînant ledit mouvement dudit élément susceptible d'être détecté (149), de telle sorte que les informations concernant la quantité de support (120) délivrée depuis ladite cassette (110) sont relayées vers la machine hôte, moyennant quoi la quantité de support (120) restant sur ledit élément formant bobine (118) dans ladite cassette (110) peut être déterminée par la machine hôte.

2. Système selon la revendication 1, comprenant en outre un manchon de protection (172) montée autour dudit élément susceptible d'être détecté (149) sur l'extérieur dudit élément de boîtier inférieur (114) de ladite cassette (110) afin d'empêcher un contact accidentel par un opérateur avec des pièces mobiles dudit ensemble d'engrenages (124).

3. Système selon la revendication 2, dans lequel ledit élément susceptible d'être détecté (149) est monté sur ledit manchon de protection (172) et est placé entre ledit manchon de protection (172) et la paroi extérieure (128) dudit élément de boîtier inférieur (114) de ladite cassette (110).

4. Système selon la revendication 2, dans lequel ledit engrenage extérieur (132) dudit ensemble d'engrenages (124) présente des parties (126, 127) s'étendant orthogonalement des deux côtés, qui sont reçues dans des trous (221 ; 230) ménagés dans ledit manchon de protection (172) et ledit élément de boîtier inférieur (114) de ladite cassette (110) pour les monter entre ceux-ci.

5. Système selon la revendication 1, comprenant en outre un engrenage complémentaire (141, 142) raccordé de manière fonctionnelle à un bras fendu (148) portant ledit élément susceptible d'être détecté (149) sur une extrémité, ledit engrenage complémentaire (141, 142) étant adapté pour tourner lors de la rotation dudit engrenage intérieur (130), ledit engrenage complémentaire (141, 142) entraînant un mouvement linéaire réciproque dudit élément susceptible d'être détecté (149).

6. Système selon la revendication 1, comprenant en outre un engrenage complémentaire (141, 142), un micro-interrupteur (152), une diode électroluminescente (DEL) (155) et une source d'alimentation (156), ledit engrenage complémentaire (141, 142) étant adapté pour tourner lors de la rotation dudit engrenage intérieur (130), ledit engrenage complémentaire (141, 142) étant adapté pour entrer en contact avec ledit micro-interrupteur (152), provoquant ainsi l'émission de lumière par ladite DEL (155) dans une relation prédéterminée avec la rotation dudit élément formant bobine (118).

7. Système selon la revendication 6, dans lequel ladite source d'alimentation comprend une pile (156) montée sur ladite partie de base (116) d'un côté dudit élément de boîtier inférieur (114) n'ayant pas ledit micro-interrupteur (152), ladite pile (156) étant raccordée électriquement audit micro-interrupteur (152) et à ladite DEL (155) à l'aide de fils tirés dans ladite partie de base (116).

8. Système selon la revendication 7, comprenant en outre une seconde pile montée sur ladite partie de base (116) et couplée électriquement à ladite première pile (156), ladite seconde pile agissant comme indicateur de faible charge pour ladite première pile (156).

9. Système selon la revendication 1, dans lequel ledit élément formant bobine (118) comprend une paire de brides (134, 238), une (134) desdites brides (134, 238) possédant des dents d'engrenage (236) pour s'engrener avec ledit engrenage intérieur (130) dudit ensemble d'engrenages (124) et entraîner sa rotation.

10. Système selon la revendication 1, dans lequel une partie inférieure (194) dudit élément de boîtier inférieur (114) de ladite cassette (110) présente une surface saillante pour le montage dudit engrenage intérieur (130) dudit ensemble d'engrenages (124) à l'intérieur de ladite cassette (110), ladite surface saillante étant placée entre ledit élément formant bobine (118) retenant le support (120) et ladite partie inférieure (194).

11. Système selon la revendication 1, dans lequel ledit élément formant bobine (115) présente deux extrémités de bobine (182, 183) et une (183) desdites extrémités de bobine (182, 183) porte une encoche pour faciliter le placement correct dudit élément formant bobine (118) dans ladite cassette (110).

12. Système selon la revendication 1, dans lequel lesdits éléments de boîtier supérieur et inférieur (112, 114) de ladite cassette (10) se combinent pour former une forme sensiblement cylindrique, ledit élément de boîtier (114) ayant une partie inférieure (194) qui est sensiblement rectangulaire pour permettre un montage stable de ladite cassette (110) sur ladite partie de base (116).

13. Système selon la revendication 1, dans lequel ledit système est agencé de manière à être installé de manière semi-permanente dans la machine hôte, moyennant quoi ledit élément formant bobine (118) est facilement amovible de ladite cassette (110) sans retirer ledit système (100) de la machine hôte.

14. Système selon la revendication 13, comprenant en outre un ensemble formant articulation (164) formé sur les bords (166, 168) desdits éléments de boîtier supérieur et inférieur (112, 114) de ladite cassette (110), ledit ensemble formant articulation (164) permettant de retirer facilement ledit élément de boîtier supérieur (112) dudit élément de boîtier inférieur (114) afin de permettre le retrait dudit élément formant bobine (118) de ladite cassette (110) tandis que ledit système (100) est installé dans la machine hôte.

15. Système selon la revendication 1, comprenant en outre une amorce en mylar opaque (248) sur l'extrémité du support (120) la plus éloignée du coeur (240) dudit élément formant bobine (118), ladite amorce (248) ayant une partie d'extrémité amincie (184) et une largeur légèrement supérieure à la largeur du support (120), ladite amorce (248) étant reçue dans des rainures annulaires (250, 252) formées sur les surfaces intérieures des brides (134, 248) dudit élément formant bobine (118).

16. Système selon la revendication 1, dans lequel le support (120) comprend un microfilm ayant une largeur de 105 mm.

17. Système selon la revendication 1, dans lequel le support (120) comprend du papier.
